# EUROPEAN PATENT APPLICATION

(11) **EP 2 793 440 A1**
(43) Date of publication of application: **22.10.2014**
(21) Application number: 12858456.2
(22) Date of filing: 17.12.2012
(51) Int. Cl.: H04L 29/06, H04W 76/02

(54) **COMMUNICATION APPARATUS AND METHOD**

(30) Priority: 16.12.2011 KR 20110136568
(71) Applicant: Samsung Electronics Co., Ltd., Suwon-si, Gyeonggi-do 443-742 (KR)
(72) Inventor: JIN, Ho, Yongin-si Gyeonggi-do 448-514 (KR); SOHN, Young-chul, Seoul 135-861 (KR); KIM, Jong-baek, Suwon-si Gyeonggi-do 443-739 (KR); SHIN, Soo-min, Suwon-si Gyeonggi-do 443-777 (KR); CHO, Jung-yon, Suwon-si Gyeonggi-do 443-737 (KR)
(74) Representative: Gover, Richard Paul
(86) International application number: PCT/KR2012/010998
(87) International publication number: WO 2013/089528

(57) **Abstract**

Provided is a method of communicating, by a first terminal, with a second terminal connected thereto over a predetermined network. The method includes: executing a first web page provided by a web server to broadcast access information of the first terminal; and forming a communication channel with the second terminal, which has received the access information of the first terminal, wherein the second terminal receives the access information of the first terminal by executing a second web page provided by the web server.

## Description

### [Detailed Description of the Invention]

### [Technical Field]

The present invention relates to a communication apparatus and method, and more particularly, to a method and apparatus for performing communication through a web page provided by a web server by executing the web page.

### [Prior Art]

In a client-server computing environment, since each software application has its own user interface, each software application should be individually installed in each user terminal. However, if a server environment of software application varies, a corresponding client application program should also be upgraded, thereby causing an increase in technical support costs and a decrease in productivity.

On the contrary, since a web application can be executed through the same web browser, the web application does not have to be individually installed in each user terminal. Thus, a web application may be maintained and managed without distributing and installing corresponding software in tens of millions terminals. A web application may also implement various functions, such as web mail, online e-commerce, auctions, Internet bulletin boards, blogs, and Massively Multiplayer Online Role-Playing Game (MMORPG) games, and so forth.

Recently, an N-screen service in relation to a home network has been developed. The N-screen service indicates a technique for continuously possessing one piece of multimedia content in N devices. Thus, a technique for providing various services including the N-screen service based on a web application is required.

### [Disclosure of the Invention]

### [Technical Goal of the Invention]

The present invention provides a communication method and apparatus for directly communicating between a plurality of terminals, which have received a web page from a web server, through web pages without intervention by the web server.

The present invention also provides a communication method and apparatus for communicating between terminals through web pages provided by a web server by executing the web pages without installing a separate application in the terminals.

### [Means for Achieving Technical Goal]

According to an aspect of the present invention, there is provided a method of communicating, by a first terminal, with a second terminal connected thereto over a predetermined network, the method including: executing a first web page provided by a web server; receiving an access request from the second terminal, which has executed a second web page provided by the web server, over the predetermined network; and accepting the received access request to form a communication channel through the first web page and the second web page with the second terminal.

The first web page may include a communication server source allowing the first terminal to accept the access request received from the second terminal, which has executed the second web page.

The second web page may include a communication client source allowing the second terminal to transmit the access request to the first terminal, which has executed the first web page.

The method may further include broadcasting access information of the first terminal over the predetermined network.

The broadcasting of the access information may include broadcasting the access information according to a simple service discovery protocol (SSDP).

The access information may include an Internet Protocol (IP) address or a port number of the first terminal.

The method may further include transmitting and receiving data to and from the second terminal through the formed communication channel.

The data may include data implemented by JavaScript.

The communication channel may be a wireless communication channel through a socket of the first terminal.

According to another aspect of the present invention, there is provided a method of communicating, by a first terminal, with a second terminal connected thereto over a predetermined network, the method including: executing a first web page provided by a web server; transmitting an access request to the second terminal, which has executed a second web page provided by the web server, over the predetermined network; and forming a communication channel through the first web page and the second web page with the second terminal if the second terminal accepts the access request.

The first web page may include a communication client source allowing the first terminal to transmit the access request to the second terminal, which has executed the second web page.

The second web page may include a communication server source allowing the second terminal to accept the access request received from the first terminal, which has executed the first web page.

The method may further include receiving access information of the second terminal broadcasted over the predetermined network.

The receiving of the access information may include receiving the access information according to a simple service discovery protocol (SSDP).

The access information may include an Internet Protocol (IP) address or a port number of the second terminal.

The method may further include transmitting and receiving data to and from the second terminal through the formed communication channel.

The data may include data implemented by JavaScript.

The communication channel may be a wireless communication channel through a socket of the first terminal.

According to another aspect of the present invention, there is provided a communication apparatus for communicating with an external terminal connected thereto over a predetermined network, including: an execution unit for executing a first web page provided by a web server; a receiver for receiving an access request from the external terminal, which has executed a second web page provided by the web server, over the predetermined network; and a communication unit for accepting the received access request to form a communication channel through the first web page and the second web page with the external terminal.

According to another aspect of the present invention, there is provided a communication apparatus for communicating with an external terminal connected thereto over a predetermined network, including: an execution unit for executing a first web page provided by a web server; a transmitter for transmitting an access request to the external terminal, which has executed a second web page provided by the web server, over the predetermined network; and a communication unit for forming a communication channel through the first web page and the second web page with the external terminal if the external terminal accepts the access request.

According to another aspect of the present invention, there is provided a web server including: a first provider for providing a first web page to a first terminal; and a second provider for providing a second web page to a second terminal connected to the first terminal over a predetermined network, wherein the first web page includes a communication client source allowing the first terminal, which has executed the first web page, to transmit an access request to the second terminal, which has executed the second web page, over the predetermined network, and the second web page includes a communication server source allowing the second terminal, which has executed the second web page, to accept the access request received from the first terminal, which has executed the first web page.

According to another aspect of the present invention, there is provided a non-transitory computer-readable storage medium having stored therein program instructions, which when executed by a computer, perform the method.

### [Brief Description of the Drawings]

FIG. 1 is a block diagram of a communication system according to an embodiment of the present invention;
FIG. 2A is a block diagram of a web server according to an embodiment of the present invention;
FIG. 2B is a block diagram of a communication apparatus according to an embodiment of the present invention;
FIG. 2C is a block diagram of a communication apparatus according to another embodiment of the present invention;
FIG. 3 is a flowchart illustrating a communication method according to an embodiment of the present invention;
FIG. 4 is a flowchart illustrating a communication method according to another embodiment of the present invention;
FIG. 5 is a signaling diagram of an illustration by a communication apparatus and method according to an embodiment of the present invention;
FIG. 6 is a signaling diagram of another illustration by a communication apparatus and method according to an embodiment of the present invention;
FIG. 7 is a signaling diagram of another illustration by a communication apparatus and method according to an embodiment of the present invention; and
FIG. 8 is a signaling diagram of another illustration by a communication apparatus and method according to an embodiment of the present invention.

### Mode of Invention

Advantages and features of the present invention and a method for achieving them will be clear with reference to the accompanying drawings, in which exemplary embodiments of the invention are shown. The invention may, however, be embodied in many different forms and should not be construed as being limited to the embodiments set forth herein; rather, these embodiments are provided so that this disclosure will be thorough and complete, and will fully convey the concept of the invention to one of ordinary skill in the art. The present invention is only defined by the claims. Like reference numerals denote like elements throughout the specification.

The term '...unit' used in the embodiments indicates a component including software or hardware, such as a Field Programmable Gate Array (FPGA) or an Application-Specific Integrated Circuit (ASIC), and the '...unit' performs certain roles. However, the '...unit' is not limited to software or hardware. The '...unit' may be configured to be included in an addressable storage medium or to reproduce one or more processors. Therefore, for example, the '...unit' includes components, such as software components, object-oriented software components, class components, and task components, processes, functions, attributes, procedures, subroutines, segments of program code, drivers, firmware, microcode, circuits, data, a database, data structures, tables, arrays, and variables. A function provided inside components and '...units' may combine them into a smaller number of components and '...units' or further divide them into additional components and '...units'.

In a general web server-client communication environment, communication between terminals, which have received a web page from a web server, is not allowed, but only communication between a terminal and the web server is allowed. Thus, to communicate between terminals, which have received a web page, the web server always intervenes between them.

Accordingly, a communication apparatus and method according to an embodiment of the present invention proposes a method of directly communicating between terminals without intervention by a web server.

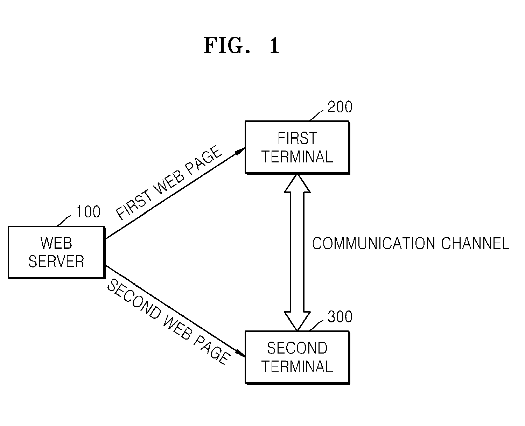

FIG. 1 is a block diagram of a communication system according to an embodiment of the present invention.

Referring to FIG. 1, the communication system according to an embodiment of the present invention may include a web server 100, a first terminal 200, and a second terminal 300. The first terminal 200 and the second terminal 300 may be connected to each other over a predetermined network. The predetermined network may include a home network.

The web server 100 transmits a first web page or a second web page to the first terminal 200 or the second terminal 300, respectively. In detail, when web browsers of the first terminal 200 and the second terminal 300 access the web server 100, the web server 100 transmits the first web page and the second web page to the first terminal 200 and the second terminal 300, respectively.

The first web page and the second web page may be the same or different. The first web page and the second web page may include a source formed by HyperText Markup Language (HTML) or JavaScript. The web browsers of the first terminal 200 and the second terminal 300 may respectively execute the first web page and the second web page to display execution results to users. In addition, the first web page and the second web page may include a web application.

The first web page may include a communication server source for accepting an access request received from a terminal, which has executed the second web page. The first terminal 200 may perform a communication server function by executing the communication server source.

The second web page may include a communication client source for transmitting an access request to a terminal, which has executed the first web page. The second terminal 300 may perform a communication client function by executing the communication client source.

In the specification, 'terminal' includes an Internet access terminal, such as a personal computer (PC), a smart TV, a personal digital assistant (PDA), a smart phone, or the like. In addition, in the specification, although it is described for convenience of description that the first terminal 200 performs the communication server function while the second terminal 300 performs the communication client function, it would be obvious to one of ordinary skill in the art that roles of the first terminal 200 and the second terminal 300 are exchangeable.

In addition, in the specification, although it is described that the first web page includes the communication server source and the second web page includes the communication client source, the first web page may include the communication client source, and the second web page may include the communication server source. In addition, each of the first web page and the second web page may include both the communication server source and the communication client source.

The first terminal 200 broadcasts its own access information over the predetermined network. The access information may include an Internet Protocol (IP) address or a port number of the first terminal 200. For example, the access information may be broadcasted according to a simple service discovery protocol (SSDP). The SSDP is a protocol used to search for a Universal Plug & Play (UPnP) device in the predetermined network. In detail, the first terminal 200 may broadcast the access information by adding the IP address or the port number of the first terminal 200 to a remote user interface client (RUIC) device description.

A source allowing the first terminal 200 to broadcast the access information may be included in the communication server source of the first web page. When the first terminal 200 has not broadcast its own access information over the predetermined network until the first terminal 200 receives the first web page from the web server 100 and executes the first web page, the source allows the first terminal 200 to broadcast its own access information by executing the first web page.

In this case, a web browser uses a socket to perform communication, such as broadcasting, over a network by executing a web page, the socket indicates a means for connecting a terminal to another terminal over the network. In particular, a socket program created to be used for MS Windows is called Winsock, which is a library providing an application programming interface (API) allowing an MS Window program to communicate with another PC through a transmission control protocol (TCP)/IP network protocol.

The first terminal 200 or the second terminal 300 may use a socket embedded in the web browser to perform communication, such as broadcasting. When the socket exists outside the web browser, a plug-in may be installed to use the socket.

The second terminal 300 receives the access information of the first terminal 200, which is broadcasted by the first terminal 200. The second terminal 300 may receive the access information of the first terminal 200 according to the SSDP.

The second terminal 300 checks the IP address or the port number of the first terminal 200 by using the received access information and transmits an access request to the first terminal 200. When the first terminal 200 accepts the access request of the second terminal 300, a communication channel through the first web page and the second web page is formed between the first terminal 200 and the second terminal 300.

The communication channel formed between the first terminal 200 and the second terminal 300 may be a wireless communication channel through sockets of the first terminal 200 and the second terminal 300.

The first terminal 200 and the second terminal 300 may transmit and receive data through the formed communication channel. The data transmitted and received between the first terminal 200 and the second terminal 300 may include data implemented by JavaScript.

The first terminal 200 and the second terminal 300 may share information regarding a web page or request to change a web page therebetween by transmitting and receiving data implemented by JavaScript through the communication channel without intervention by the web server 100.

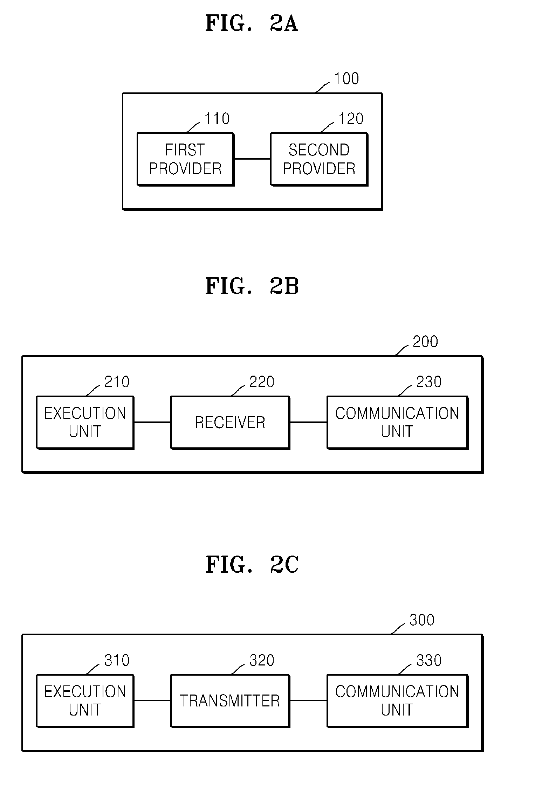

FIG. 2A is a block diagram of the web server 100 according to an embodiment of the present invention.

Referring to FIG. 2A, the web server 100 may include a first provider 110 and a second provider 120. The web server 100 may further include a set-top box.

The first provider 110 provides the first web page to the first terminal 200.

The second provider 120 provides the second web page to the second terminal 300 that is connected to the first terminal 200 over the predetermined network.

Although FIG. 2A shows that the first provider 110 and the second provider 120 are separated from each other, the first provider 110 and the second provider 120 may be implemented as one microchip.

FIG. 2B is a block diagram of a communication apparatus according to an embodiment of the present invention.

Referring to FIG. 2B, the first terminal 200 may include an execution unit 210, a receiver 220, and a communication unit 230. The execution unit 210, the receiver 220, and the communication unit 230 may be implemented as one microchip.

The execution unit 210 executes the first web page provided by the web server 100.

The receiver 220 receives an access request transmitted from the second terminal 300, which has executed the second web page provided by the web server 100, via the predetermined network. The second terminal 300 may transmit an access request to the first terminal 200 by executing the second web page provided by the web server 100.

The communication unit 230 accepts the access request of the second terminal 300 to form a communication channel through the first web page and the second web page with the second terminal 300.

The communication unit 230 may form a wireless communication channel with the second terminal 300 by using the socket of the first terminal 200. The communication unit 230 may transmit and receive data to and from the second terminal 300 through the communication channel formed between the first terminal 200 and the second terminal 300.

The first terminal 200 may further include a broadcasting unit (not shown) for broadcasting access information of the first terminal 200. The broadcasting unit may broadcast the access information of the first terminal 200 over the predetermined network according to the SSDP.

FIG. 2C is a block diagram of a communication apparatus according to another embodiment of the present invention.

Referring to FIG. 2C, the second terminal 300 may include an execution unit 310, a transmitter 320, and a communication unit 330. The execution unit 310, the transmitter 320, and the communication unit 330 may be implemented as one microchip.

The execution unit 310 executes a second web page provided by the web server 100.

The transmitter 320 transmits an access request to the first terminal 200, which has executed a first web page provided by the web server 100, via the predetermined network.

The communication unit 330 forms a communication channel through the first web page and the second web page with the first terminal 200 if the first terminal 200 accepts the access request.

The second terminal 300 may further include a broadcasting receiver (not shown) for receiving access information broadcasted by the first terminal 200. The transmitter 320 transmits an access request to the first terminal 200 according to the received access information of the first terminal 200. The broadcasting receiver may receive the access information according to the SSDP.

The communication unit 330 may form a wireless communication channel with the first terminal 200 by using the socket of the second terminal 300. The communication unit 330 may transmit and receive data to and from the first terminal 200 through the communication channel formed through web pages of the first and second terminals 200 and 300.

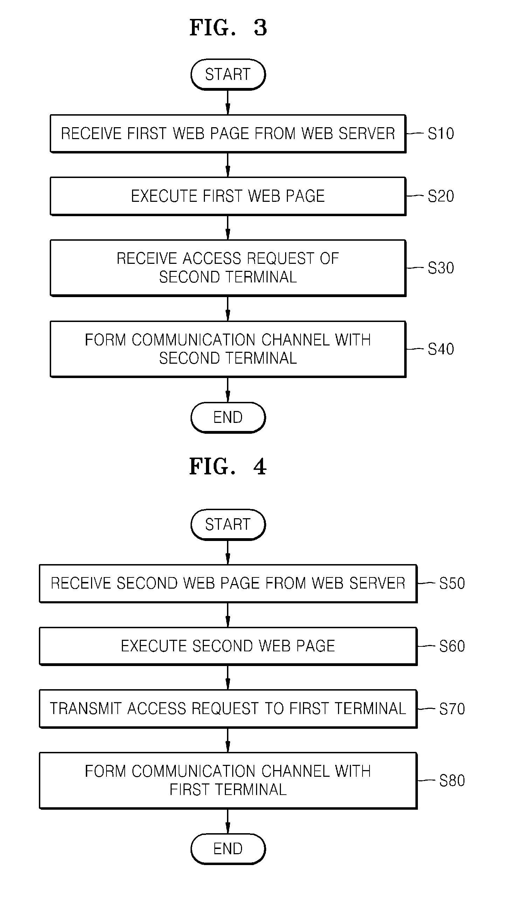

FIG. 3 is a flowchart illustrating a communication method according to an embodiment of the present invention. Referring to FIG. 3, the communication method is formed by operations sequentially processed in the communication apparatus shown in FIG. 2B. Thus, although omitted hereinafter, the description related to the communication apparatus shown in FIG. 2B is also applicable to the communication method of FIG. 3.

In operation S10, the execution unit 210 receives a first web page provided by the web server 100.

In operation S20, the execution unit 210 executes the first web page. The first web page may include a communication server source.

In operation S30, the receiver 220 receives an access request of the second terminal 300, which is transmitted from the second terminal 300 via the predetermined network. The second terminal 300 may transmit an access request to the first terminal 200 by executing a second web page provided by the web server 100.

In operation S40, the communication unit 230 accepts the access request transmitted from the second terminal 300 to form a communication channel with the second terminal 300.

FIG. 4 is a flowchart illustrating a communication method according to another embodiment of the present invention. Referring to FIG. 4, the communication method is formed by operations sequentially processed in the communication apparatus shown in FIG. 2C. Thus, although omitted hereinafter, the description related to the communication apparatus shown in FIG. 2C is also applicable to the communication method of FIG. 4.

In operation S50, the execution unit 310 of the second terminal 300 receives a second web page from the web server 100.

In operation S60, the execution unit 310 executes the second web page. The second web page may include a source for performing the communication client function.

In operation S70, the transmitter 320 transmits an access request to the first terminal 200, which has executed a first web page.

In operation S80, the communication unit 330 forms a communication channel with the first terminal 200 if the first terminal 200 accepts the access request.

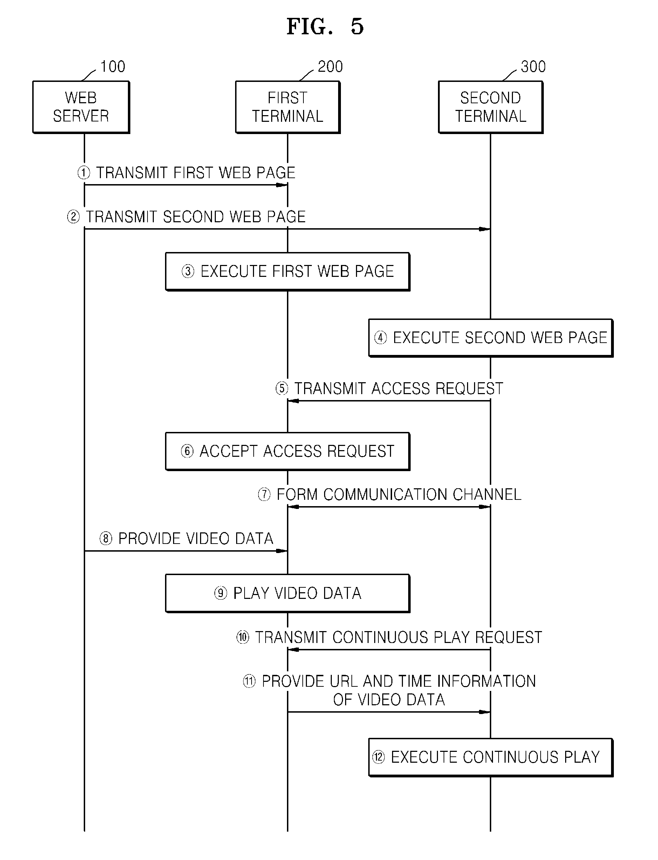

FIG. 5 is a signaling diagram of an illustration by a communication apparatus and method according to an embodiment of the present invention.

FIG. 5 is an illustration in which the second terminal 300 performs a continuous play of video data being played by the first terminal 200 by using a communication apparatus and method according to an embodiment of the present invention.

① The web server 100 transmits a first web page to the first terminal 200, ② and transmits a second web page to the second terminal 300. ③ The web browser of the first terminal 200 executes the first web page, and ④ the web browser of the second terminal 300 executes the second web page. ⑤ The second terminal 300 transmits an access request to the first terminal 200. The second terminal 300 may receive access information broadcasted by the first terminal 200 and transmit an access request according to the access information. ⑥ The first terminal 200 accepts the received access request. ⑦ A communication channel through web pages is formed between the second terminal 300 and the first terminal 200. ⑧ If the first web page executed by the first terminal 200 is a web application for playing video data, the first terminal 200 receives video data from the web server 100. ⑨ The first terminal 200 plays the received video data by using the web application. ⑩ The second terminal 300 transmits a continuous play request to the first terminal 200 through a communication channel. The continuous play request may be transmitted in the form implemented by JavaScript. ⑪ The first terminal 200 provides a Uniform Resource Locator (URL) and time information of the currently played video data to the second terminal 300. ⑫ The second terminal 300 may continuously play the video data being played by the first terminal 200 according to the received URL and time information of the video data.

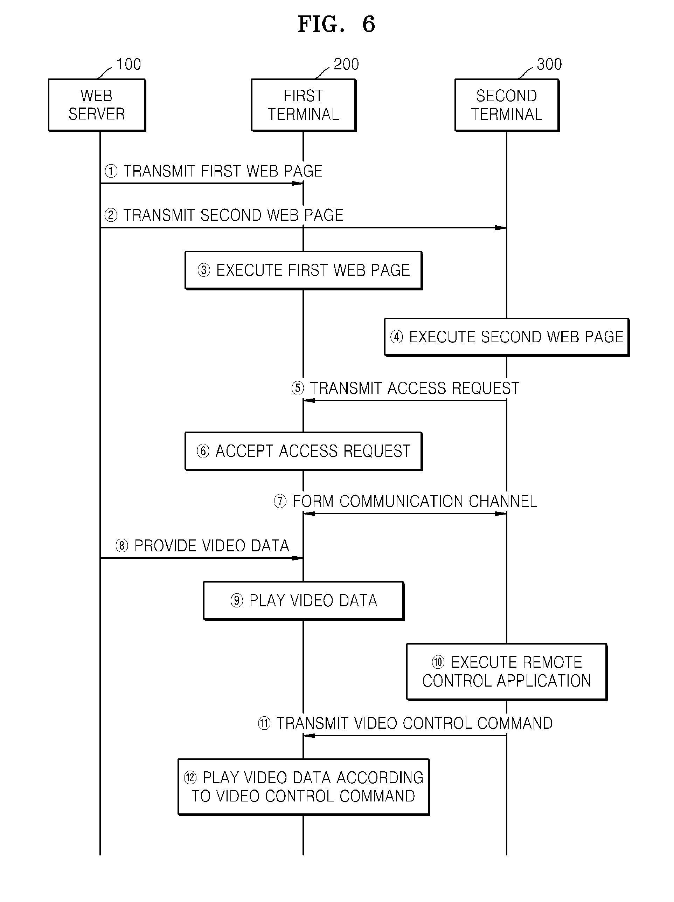

FIG. 6 is a signaling diagram of another illustration by a communication apparatus and method according to an embodiment of the present invention;

FIG. 6 is an illustration in which the second terminal 300 controls video data being played by the first terminal 200 by using a communication apparatus and method according to an embodiment of the present invention.

① The web server 100 transmits a first web page to the first terminal 200, ② and transmits a second web page to the second terminal 300. ③ The web browser of the first terminal 200 executes the first web page, and ④ the web browser of the second terminal 300 executes the second web page. ⑤ The second terminal 300 transmits an access request to the first terminal 200. The second terminal 300 may receive access information broadcasted by the first terminal 200 and transmit an access request according to the access information. ⑥ The first terminal 200 accepts the received access request. ⑦ A communication channel through web pages is formed between the second terminal 300 and the first terminal 200. ⑧ If the first web page executed by the first terminal 200 is a web application for playing video data, the first terminal 200 receives video data from the web server 100. ⑨ The first terminal 200 plays the received video data by using the web application. ⑩ The web browser of the second terminal 300 executes a remote control application by using the second web page. ⑪ If a predetermined control operation is input to the second terminal 300 by a user, the web browser of the second terminal 300 transmits a video control command to the web browser of the first terminal 200. The video control command may include stop, play, double-speed play, or the like of video. The video control command may be in a form implemented by JavaScript. ⑫ The first terminal 200 plays the video data according to the received video control command.

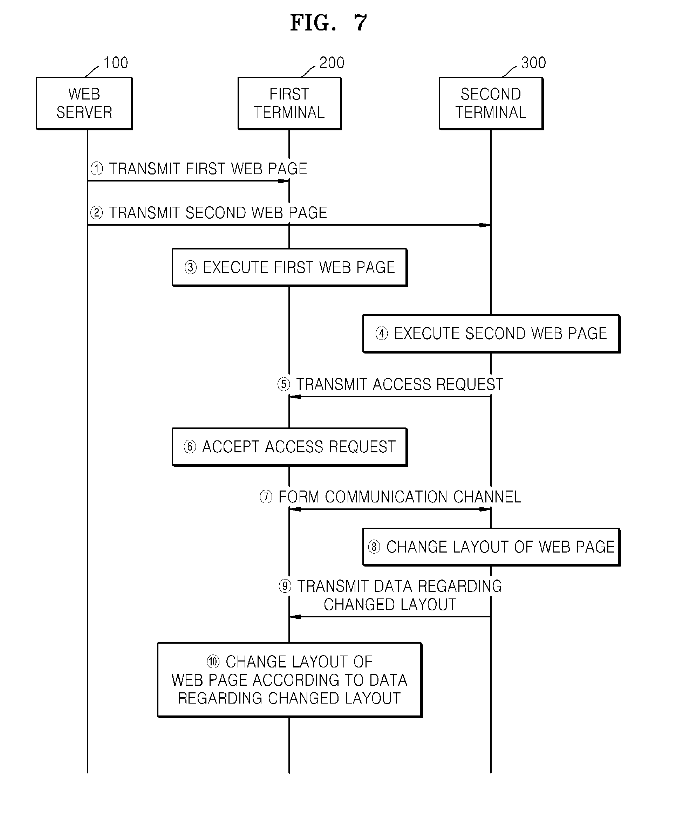

FIG. 7 is a signaling diagram of another illustration by a communication apparatus and method according to an embodiment of the present invention.

FIG. 7 is an illustration in which if a layout of a web page executed by the second terminal 300 is changed, the changed layout is applied to a web page executed by the first terminal 200 by using a communication apparatus and method according to an embodiment of the present invention. When the first terminal 200 is a smart TV, and the second terminal 300 is a smart phone, it is difficult to change a layout of a web page in the smart TV, while it is easy to change a layout of a web page in the smart phone.

① The web server 100 transmits a first web page to the first terminal 200, ② and transmits a second web page to the second terminal 300. ③ The web browser of the first terminal 200 executes the first web page, and ④ the web browser of the second terminal 300 executes the second web page. ⑤ The second terminal 300 transmits an access request to the first terminal 200. The second terminal 300 may receive access information broadcasted by the first terminal 200 and transmit an access request according to the access information. ⑥ The first terminal 200 accepts the received access request. ⑦ A communication channel through web pages is formed between the second terminal 300 and the first terminal 200. ⑧ The second terminal 300 changes a layout of a web page executed by the web browser. ⑨ The web browser of the second terminal 300 transmits data regarding the changed layout to the first terminal 200, and ⑩ the first terminal 200 changes a layout of a web page being executed by the first terminal 200 according to the data regarding the changed layout. The data regarding the changed layout may be in a form implemented by JavaScript.

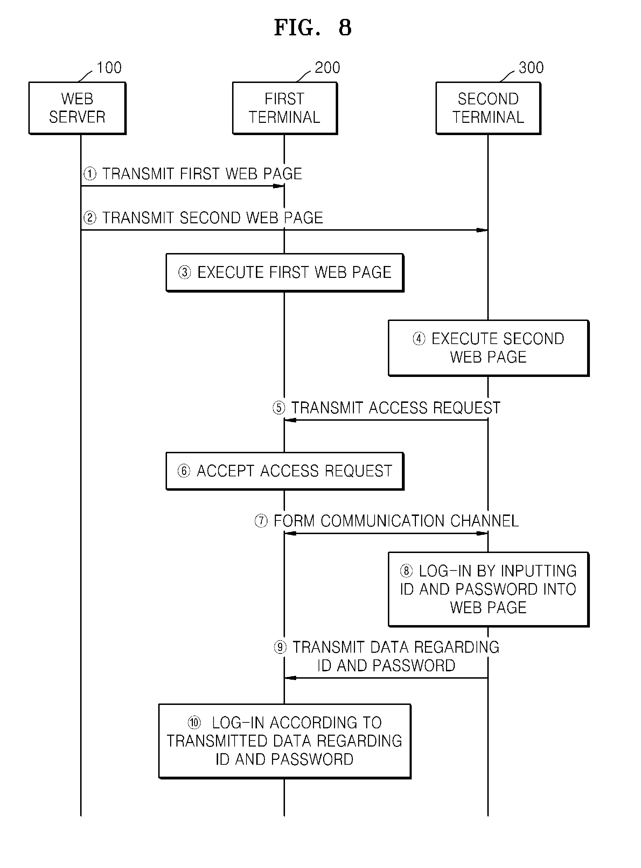

FIG. 8 is a signaling diagram of another illustration by a communication apparatus and method according to an embodiment of the present invention.

FIG. 8 is an illustration in which if a user logs in the second terminal 300 by inputting an identification (ID) and a password to a web page executed by the second terminal 300, log-in of the first terminal 200 is also performed. When the first terminal 200 is a smart TV, and the second terminal 300 is a smart phone, since it is generally difficult to input characters or numbers to the smart TV, the user may log in a web page by using the smart phone to also log in a web page of the smart TV.

① The web server 100 transmits a first web page to the first terminal 200, ② and transmits a second web page to the second terminal 300. ③ The web browser of the first terminal 200 executes the first web page, and ④ the web browser of the second terminal 300 executes the second web page. ⑤ The second terminal 300 transmits an access request to the first terminal 200. The second terminal 300 may receive access information broadcasted by the first terminal 200 and transmit an access request according to the access information. ⑥ The first terminal 200 accepts the received access request. ⑦ A communication channel through web pages is formed between the second terminal 300 and the first terminal 200. ⑧ The user logs in the second terminal 300 by inputting an ID and a password to a web page executed by the second terminal 300. ⑨ The web browser of the second terminal 300 transmits data regarding the user ID and password to the first terminal 200, and ⑩ the first terminal 200 logs in a web page according to the data regarding the user ID and password.

The embodiments of the present invention can be written as computer programs and can be implemented in general-use digital computers that execute the programs using a computer-readable recording medium. Examples of the computer-readable recording medium include magnetic storage media (e.g., ROM, floppy disks, hard disks, etc.), optical recording media (e.g., CD-ROMs, or DVDs), and storage media (e.g., transmission through the Internet).

A communication apparatus and method according to an embodiment of the present invention allow a plurality of terminals, which have received a web page from a web server, to directly communicate with each other through web pages without intervention by the web server.

In addition, a communication apparatus and method according to an embodiment of the present invention allow terminals to communicate with each other through web pages provided by a web server by executing the web pages without installing separate applications in the terminals.

While the present invention has been particularly shown and described with reference to exemplary embodiments thereof, it will be understood by those of ordinary skill in the art that various changes in form and details may be made therein without departing from the spirit and scope of the present invention as defined by the following claims.

## Claims

1. A method of communicating, by a first terminal, with a second terminal connected thereto over a predetermined network, the method comprising:
executing a first web page provided by a web server;
receiving an access request from the second terminal, which has executed a second web page provided by the web server, over the predetermined network; and
accepting the received access request to form a communication channel through the first web page and the second web page with the second terminal.

2. The method of claim 1, wherein the first web page includes a communication server source allowing the first terminal to accept the access request received from the second terminal, which has executed the second web page.

3. The method of claim 1, wherein the second web page includes a communication client source allowing the second terminal to transmit the access request to the first terminal, which has executed the first web page.

4. The method of claim 1, further comprising broadcasting access information of the first terminal over the predetermined network.

5. The method of claim 4, wherein the broadcasting of the access information comprises broadcasting the access information according to a simple service discovery protocol (SSDP).

6. The method of claim 4, wherein the access information includes an Internet Protocol (IP) address or a port number of the first terminal.

7. The method of claim 1, further comprising transmitting and receiving data to and from the second terminal through the formed communication channel.

8. The method of claim 7, wherein the data includes data implemented by JavaScript.

9. The method of claim 1, wherein the communication channel is a wireless communication channel through a socket of the first terminal.

10. A method of communicating, by a first terminal, with a second terminal connected thereto over a predetermined network, the method comprising:
executing a first web page provided by a web server;
transmitting an access request to the second terminal, which has executed a second web page provided by the web server, over the predetermined network; and
forming a communication channel through the first web page and the second web page with the second terminal if the second terminal accepts the access request.

11. The method of claim 10, wherein the first web page includes a communication client source allowing the first terminal to transmit the access request to the second terminal, which has executed the second web page.

12. The method of claim 10, wherein the second web page includes a communication server source allowing the second terminal to accept the access request received from the first terminal, which has executed the first web page.

13. The method of claim 10, further comprising receiving access information of the second terminal broadcasted over the predetermined network.

14. The method of claim 13, wherein the receiving of the access information comprises receiving the access information according to a simple service discovery protocol (SSDP).

15. The method of claim 13, wherein the access information includes an Internet Protocol (IP) address or a port number of the second terminal.

16. The method of claim 10, further comprising transmitting and receiving data to and from the second terminal through the formed communication channel.

17. The method of claim 16, wherein the data includes data implemented by JavaScript.

18. The method of claim 10, wherein the communication channel is a wireless communication channel through a socket of the first terminal.

19. A communication apparatus for communicating with an external terminal connected thereto over a predetermined network, comprising:
an execution unit for executing a first web page provided by a web server;
a receiver for receiving an access request from the external terminal, which has executed a second web page provided by the web server, over the predetermined network; and
a communication unit for accepting the received access request to form a communication channel through the first web page and the second web page with the external terminal.

20. A communication apparatus for communicating with an external terminal connected thereto over a predetermined network, comprising:
an execution unit for executing a first web page provided by a web server;
a transmitter for transmitting an access request to the external terminal, which has executed a second web page provided by the web server, over the predetermined network; and
a communication unit for forming a communication channel through the first web page and the second web page with the external terminal if the external terminal accepts the access request.

21. A web server comprising:
a first provider for providing a first web page to a first terminal; and
a second provider for providing a second web page to a second terminal connected to the first terminal over a predetermined network,
wherein the first web page includes a communication client source allowing the first terminal, which has executed the first web page, to transmit an access request to the second terminal, which has executed the second web page, over the predetermined network, and
the second web page includes a communication server source allowing the second terminal, which has executed the second web page, to accept the access request received from the first terminal, which has executed the first web page.

22. A non-transitory computer-readable storage medium having stored therein program instructions, which when executed by a computer, perform the method of claim 1.
